# EUROPÄISCHE PATENTSCHRIFT

(11) **EP 2 454 856 B1**
(45) Veröffentlichungstag und Bekanntmachung des Hinweises auf die Patenterteilung: **25.06.2014**
(21) Anmeldenummer: 10732924.5
(22) Anmeldetag: 09.07.2010
(51) Int. Cl.: H04L 12/701

(54) **ZUORDNUNGSAKTUALISIERUNGSNACHRICHT UND VERFAHREN ZUR ZUORDNUNGSAKTUALISIERUNG IN EINEM MESH-NETZ**
ASSOCIATION UPDATE MESSAGE AND METHOD FOR UPDATING ASSOCIATIONS IN A MESH NETWORK
MESSAGE DE MISE À JOUR D AFFECTATIONS ET PROCÉDÉ DE MISE À JOUR D AFFECTATIONS DANS UN RÉSEAU MAILLÉ

(30) Priorität: 13.07.2009 EP 09009115
(43) Veröffentlichungstag der Anmeldung: 23.05.2012
(73) Patentinhaber: Siemens Aktiengesellschaft, 80333 München (DE)
(72) Erfinder: BAHR, Michael, 81827 München (DE)
(86) Internationale Anmeldenummer: PCT/EP2010/059864
(87) Internationale Veröffentlichungsnummer: WO 2011/006841

(56) Entgegenhaltungen:
- 802.11 Working Group: "Local and metropolitan area networks-Specific requirements-Part 11: Wireless LAN Medium Access Control(MAC) and Physical Layer (PHY) specificationsAmendment 10: Mesh Networking" 31. März 2009 (2009-03-31), XP002597230 Piscataway, NJ 08855-1331, USA Gefunden im Internet: URL:http://ieeexplore.ieee.org/stamp/stamp .jsp?tp=&arnumber=5154157 [gefunden am 2010-08-19]
- Michael Bahr: "IEEE 802.11-09/0857r0, Proxy Update element revision, submission for IEEE 802.11s" 15. Juli 2009 (2009-07-15), XP002597231 Gefunden im Internet: URL:https://mentor.ieee.org/802.11/documen ts?n=15&o=6a0d1d2d3d4a5a7d8a9a&is_group=00 0s [gefunden am 2010-08-19]
- MICHAEL BAHR ED - REZA SHOKRI ET AL: "Update on the Hybrid Wireless Mesh Protocol of IEEE 802.11s" MOBILE ADHOC AND SENSOR SYSTEMS, 2007. MASS 2007. IEEE INTERNATONAL CO NFERENCE ON, IEEE, PI, 1. Oktober 2007 (2007-10-01) , Seiten 1-6, XP031200980 ISBN: 978-1-4244-1454-3

## Beschreibung

Die Erfindung betrifft ein Verfahren zur Zuordnungsaktualisierung in einem Mesh-Netz, insbesondere gemäß dem Standard IEEE 802.11s.

Der derzeitig noch im Entwurf befindliche Standard IEEE 802.11s ist eine Teilspezifikation des Standards IEEE 802.11, welcher einen Industriestandard für eine drahtlose Netzwerkkommunikation spezifiziert. Ziel von IEEE 802.11s ist die Schaffung einer Spezifikation zur Einrichtung von drahtlosen, vermaschten Netzen, in der Fachwelt auch als Wireless Mesh Networks oder Mesh-Netze bezeichnet. Ein Mesh-Netz ist in der Lage, sich weitgehend selbstständig aufzubauen und zu konfigurieren.

Aus dem Dokument IEEE P802.11s / D3.02: »Draft Standard for Information Technology - Telecommunications and Information Exchange between Systems - Local and Metropolitan Area Networks - Specific Requirements - Part 11: Wireless LAN Medium Access Control (MAC) and Physical Layer (PHY) Specifications - Amendment 10: Mesh Networking« ist ein sogenanntes »Proxy Protocol« bekannt, welches in Abschnitt 11C.9.5 des genannten Dokuments beschrieben wird. Im Folgenden wird auf das besagte »Proxy Protocol« mit dem Begriff Stellvertreterprotokoll Bezug genommen.

Im Rahmen des Stellvertreterprotokolls werden zwei Knotentypen unterschieden. Ein Stellvertreterknoten (»Proxy«) ist ein Knoten, welcher üblicherweise - jedoch nicht notwendigerweise - Bestandteil des Mesh-Netzes ist. Ein solcher Stellvertreterknoten erlaubt zum Beispiel eine vorübergehende Einbeziehung von netzexternen Kommunikationspartnern, welche nicht selbst Bestandteil des Mesh-Netzes sind. Da Stellvertreterknoten an den (logischen) Randgebieten eines Mesh-Netzes auftreten, können diese auch als Mesh-Randknoten bezeichnet werden.

Ein repräsentierter Knoten ist ein netzexterner Knoten, welcher einem Stellvertreterknoten derart zugeordnet ist, dass eine vorübergehende oder permanente Kommunikationsbeziehung zwischen dem repräsentierten Knoten und dem Stellvertreterknoten sowie weiteren dem Mesh-Netz zugeordneten Knoten eingerichtet werden kann, ohne dass der repräsentierte Knoten Bestandteil des Mesh-Netzes wird.

Das Stellvertreterprotokoll verfolgt im Zusammenhang mit der Lehre des oben bezeichneten Standarddokuments das Ziel, die zeitweilige oder ständige Zuordnung von repräsentierten Knoten zu deren jeweiligen Stellvertreterknoten im Mesh-Netz zu verteilen.

Eine im Stellvertreterprotokoll vorgesehene Nachricht, eine sogenannte Proxy-Update-Nachricht, im Folgenden: Zuordnungsaktualisierungsnachricht, und eine entsprechende Proxy-Update-Confirmation-Nachricht, im Folgenden: Zuordnungsaktualisierungsbestätigungsnachricht, stellen Mittel für die Verteilung von Zuordnungsinformationen in einem Mesh-Netz zur Verfügung. Zuordnungsinformationen bezeichnen dabei Informationen über die Zuordnung eines repräsentierten Knotens zu einem Stellvertreterknoten.

Die bislang bekannte Zuordnungsaktualisierungsnachricht weist Nachteile auf.

Ein wichtiger Nachteil der bislang bekannten Zuordnungsaktualisierungsnachricht besteht darin, dass diese keine strukturierte Informationsübertragung vorsieht, gemäß der eine gleichzeitige Aktualisierung mehrerer Zuordnungen von repräsentierten Knoten im Verhältnis zu ihren Stellvertreterknoten gestattet wäre. Weiterhin gestattet die bislang bekannte Zuordnungsaktualisierungsnachricht keine Aktualisierung von Zuordnungsinformationen in Bezug auf repräsentierte Knoten, welche einem anderen Stellvertreterknoten als dem die Zuordnungsaktualisierungsnachricht sendenden Stellvertreterknoten zugeordnet sind.

Aufgabe der Erfindung ist es, Mittel bereit zu stellen, welche eine strukturierte Form einer Zuordnungsaktualisierung ermöglichen, durch welche die bislang bekannten Nachteile zumindest teilweise behoben werden.

Die Aufgabe wird durch eine Zuordnungsaktualisierungsnachricht mit den Merkmalen des Patentanspruchs 1 sowie durch ein Verfahren zur Zuordnungsaktualisierung mit den Merkmalen des Patentanspruchs 5 gelöst.

Erfindungsgemäß ist eine Zuordnungsaktualisierungsnachricht der gattungsmäßig bekannten Art zur Aktualisierung von in mindestens einem Stellvertreterknoten vorgehaltener Zuordnungsinformation vorgesehen, welche mindestens ein Stellvertreterinformationsfeld enthält.

Das Stellvertreterinformationsfeld umfasst ein mehrere Kennzeichen - in der Fachwelt auch als »Flag« bekannt - umfassendes Kennzeichenfeld. Im Einzelnen ist ein erstes Kennzeichen im Kennzeichenfeld vorgesehen, das bestimmt bzw. Angaben liefert, ob eine im Stellvertreterinformationsfeld definierte Zuordnung aus der Zuordnungsinformation zu löschen oder dieser hinzuzufügen ist. Darüber hinaus ist ein weiteres Kennzeichen im Kennzeichenfeld vorgesehen, das bestimmt, ob im Stellvertreterinformationsfeld eine Angabe einer Stellvertreterinformationslaufzeit enthalten ist.

In vorteilhafter Weise bietet die erfindungsgemäße Zuordnungsaktualisierungsnachricht die Möglichkeit, mehrere Stellvertreterinformationsfelder in einer Nachricht vorzusehen und so eine gleichzeitige Aktualisierung mehrerer Zuordnungen von repräsentierten Knoten im Verhältnis zu ihren Stellvertreterknoten zu gewährleisten. Damit wird eine gemäß der im Stand der Technik drohende Inkonsistenz bei einer Zuordnungsaktualisierung, welche lediglich ein Senden einer Zuordnungsaktualisierungsnachricht pro Zuordnungsaktualisierung vorsieht behoben. Bei der im Stand der Technik praktizierten Zuordnungsaktualisierung war keine gleichzeitige Aktualisierung mehrerer Zuordnungen von repräsentierten Knoten im Verhältnis zu ihren Stellvertreterknoten gestattet. Dies konnte vor Anwendung der erfindungsgemäßen Lehre dazu führen, dass zwischen dem Eintreffen einer ersten Zuordnungsaktualisierungsnachricht und dem Eintreffen einer zweiten Zuordnungsaktualisierungsnachricht im Empfänger der zweiten Zuordnungsaktualisierungsnachricht Änderungen, etwa aufgrund einer von einem anderen Sender gesendeten dritten Zuordnungsaktualisierungsnachricht eine Inkonsistenz auftreten konnte.

Das erfindungsgemäße Stellvertreterinformationsfeld umfasst ein mehrere Kennzeichen umfassendes Kennzeichenfeld. Die Kennzeichen ermöglichen in vorteilhafter Weise eine variable, d.h. von der übertragenen Information abhängige Strukturierung der Stellvertreterinformationsfelder, welche neben einem minimalen Datengrößenbedarf auch die Möglichkeit beinhaltet, redundante Informationen in den Stellvertreterinformationsfeldern zu vermeiden.

Weitere Ausgestaltungen der Erfindung sind Gegenstand der Unteransprüche.

Gemäß einer Weiterbildung der Erfindung ist ein Kennzeichen im Kennzeichenfeld vorgesehen, das bestimmt bzw. Angaben liefert, ob im Stellvertreterinformationsfeld eine Angabe eines Stellvertreterknotens enthalten ist. Eine solche Maßnahme führt in vorteilhafter Weise zu einer weiteren Verringerung des Datengrößenbedarfs der Stellvertreterinformationsfelder.

Ein Ausführungsbeispiel mit weiteren Vorteilen und Ausgestaltungen der Erfindung wird im Folgenden anhand der Zeichnung näher erläutert.

Dabei zeigen:
- Fig. 1:: einen Ausschnitt aus einer beispielhaften Ausführung eines Mesh-Netzes;
- Fig. 2:: eine schematische Darstellung einer Struktur einer Zuordnungsaktualisierungsnachricht;
- Fig. 3:: eine schematische Darstellung einer Struktur eines Stellvertreterinformationsfeldes;
- Fig. 4:: eine schematische Darstellung einer Struktur eines Kennzeichenfeldes;

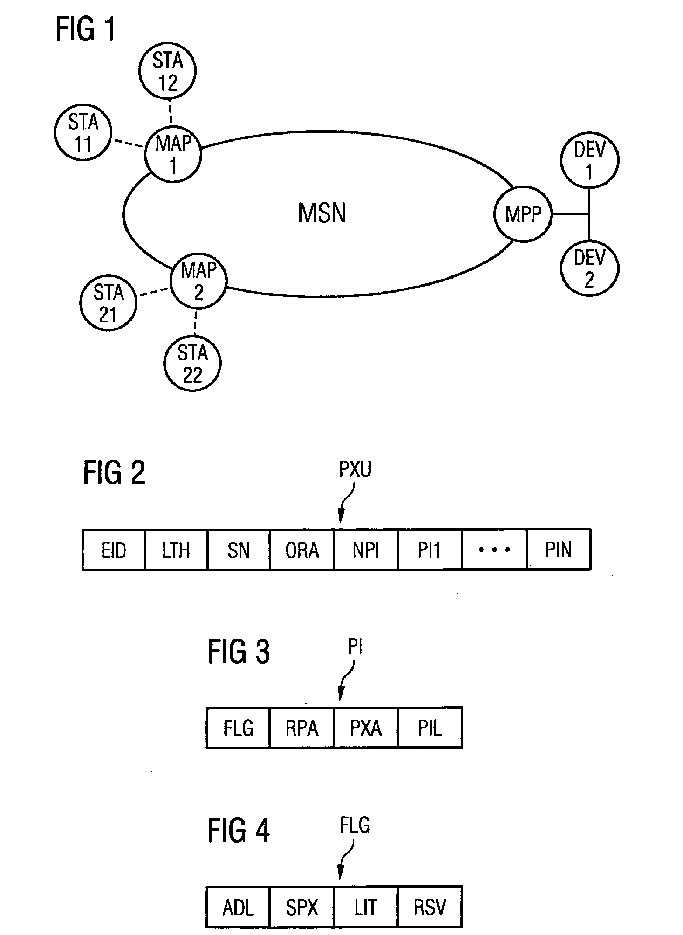

Figur 1 zeigt einen Ausschnitt aus einer beispielhaften Ausführung eines Mesh-Netzes MSN, umfassend einen ersten Mesh-Randknoten MAP1, einen zweiten Mesh-Randknoten MAP2 sowie einen dritten Mesh-Randknoten MPP. Die genannten Mesh-Randknoten MAP1, MAP2, MPP sind dadurch charakterisiert, dass diese neben Verbindungen zu anderen - nicht dargestellten - Mesh-Knoten im Inneren des Mesh-Netzes MSN auch Verbindungen aufweisen, welche nicht zum Mesh-Netz MSN gehören. Im vorliegenden Ausführungsbeispiel haben die Mesh-Randknoten MAP1, MAP2, MPP auch eine Funktion als Stellvertreterknoten MAP1, MAP2, MPP inne. Ein Stellvertreterknoten MAP1, MAP2, MPP muss nicht notwendigerweise ein Meshrandknoten MAP1, MAP2, MPP sein.

Nicht zum Mesh-Netz MSN gehörende Verbindungen, genauer als »Zuordnung« bezeichnet, werden insbesondere zu netzexternen Knoten unterhalten, namentlich zu den in der Zeichnung dargestellten Knoten STA11, STA12, STA21, STA22, DEV1, DEV2. Letztgenannte Knoten STA11, STA12, STA21, STA22, DEV1, DEV2 sind nicht direkter Bestandteil des Mesh-Netzes MSN und werden daher auch als »externe Knoten« STA11, STA12, STA21, STA22, DEV1, DEV2 bezeichnet.

Die netzexternen Knoten STA11, STA12, STA21, STA22, DEV1, DEV2 sind einem jeweiligen Stellvertreterknoten MAP1, MAP2, MPP zugeordnet und sind daher repräsentierte Knoten STA11, STA12, STA21, STA22, DEV1, DEV2 des jeweiligen Stellvertreterknotens MAP1, MAP2, MPP.

Das in Figur 1 dargestellte Mesh-Netz MSN weist darüber hinaus eine Mehrzahl - nicht dargestellter - Mesh-Knoten im Inneren des Mesh-Netzes auf, diese sind jedoch für die nachfolgende Beschreibung nicht relevant.

Mit dem Begriff Mesh-Randknoten MAP1, MAP2, MPP wird ein Mesh-Knoten bezeichnet, welcher neben - nicht dargestellten - Verbindungen zu anderen Mesh-Knoten innerhalb des Mesh-Netzes MSN auch Verbindungen zu externen Knoten STA11, STA12, STA21, STA22, DEV1, DEV2 hat. Derartige Mesh-Randknoten MAP1, MAP2, MPP können im Zusammenhang mit der Lehre des Standards IEEE 802.11s sowohl Mesh-Zugangspunkte sein, als auch Mesh-Portale.

Mit den genannten Mesh-Zugangspunkten können sich herkömmliche WLAN-Stationen oder auch Nutzerknoten verbinden, um über das Mesh-Netz MSN zu kommunizieren. Für die letztgenannten Mesh-Portale können auch Verbindungen zu anderen Netzen, wie z.B. einem - nicht dargestellten - drahtgebundenen Ethernet unterhalten werden.

Konzeptionell können Mesh-Zugangspunkte und Mesh-Portale gemäß dem vorliegenden Ausführungsbeispiel in gleicher Weise behandelt werden. Allerdings unterscheiden sie sich in der Art und Weise, wie diese Informationen über Knoten außerhalb des Mesh-Netzes MSN, die über sie erreicht werden können, erhalten. Auch die Topologie und die mögliche Anzahl von über sie erreichbaren externen Knoten können unterschiedlich sein.

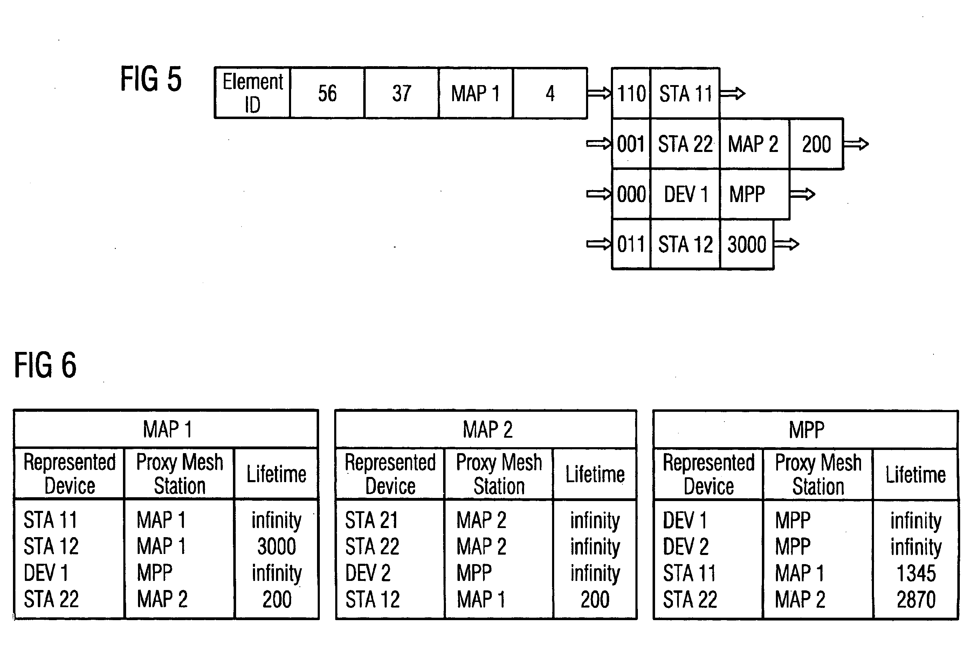

In Vorgriff auf eine detaillierte Erläuterung der Figur 6 sei voraus geschickt, dass im Kontext des Ausführungsbeispiels »Zuordnungstabellen« derart definiert sind, dass diese Informationen über Zuordnungen zwischen Stellvertreterknoten MAP1, MAP2, MPP und jeweiligen repräsentierten Knoten STA11, STA12, STA21, STA22, DEV1, DEV2 enthalten. Bei einer solchen Zuordnung agieren die Mesh-Randknoten MAP1, MAP2, MPP als Stellvertreterknoten (»Proxy Mesh Station«) für die repräsentierten (»Represented Station« bzw. »Proxied Station«) Knoten STA11, STA12, STA21, STA22, DEV1, DEV2.

Ein Eintrag in einer Zuordnungstabelle beschreibt, über welchen Stellvertreterknoten MAP1, MAP2, MPP ein gegebener repräsentierter Knoten STA11, STA12, STA21, STA22, DEV1, DEV2 aus dem Mesh-Netz MSN heraus erreicht werden kann.

Als Zuordnungsaktualisierungsnachricht sei im Folgenden eine Nachricht definiert, mit Hilfe derer Zuordnungen von repräsentierten Knoten zu Stellvertreterknoten im Mesh-Netz bekannt gemacht werden. Auf die Struktur dieser Zuordnungsaktualisierungsnachrichten wird im Folgenden detaillierter eingegangen.

In Figur 2 ist eine Struktur einer Zuordnungsaktualisierungsnachricht PXU (»Proxy Update Message«) gemäß einer Ausführungsform der erfindungsgemäßen Mittel dargestellt. Die erfindungsgemäße Zuordnungsaktualisierungsnachricht PXU enthält dabei in einer gemäß Figur 2 von links nach rechts dargestellten Reihenfolge folgende Datenfelder:
- Eine Elementidentifikationsnummer EID dient einer Identifikation der Nachricht als eine Zuordnungsaktualisierungsnachricht PXU. Die Elementidentifikationsnummer EID ist ein im Standard IEEE 802.11s definiertes spezifisches Datenfeld. Das die Elementidentifikationsnummer EID enthaltende Datenfeld weist vorzugsweise eine Länge von einem Oktett auf.
- Eine Längenangabe LTH (»Length«) definiert eine Länge der Zuordnungsaktualisierungsnachricht PXU. Auch die Längenangabe LTH ist ein im Standard IEEE 802.11s definiertes spezifisches Datenfeld. Das die Längenangabe LTH enthaltende Datenfeld weist vorzugsweise eine Länge von einem Oktett auf.

- Eine Sequenznummer SN (»PXU Sequence Number«) enthält eine eindeutige Identifikation einer Zuordnungsaktualisierungsnachricht PXU, auch innerhalb einer Sequenz oder zeitlichen Abfolge. Das die Sequenznummer SN enthaltende Datenfeld weist vorzugsweise eine Länge von einem Oktett auf.
- Ein Urheberadressfeld ORA (»PXU Originator MAC Address«), welchem eine Adresse, vorzugsweise MAC-Adresse, des Urhebers bzw. Senders der Zuordnungsaktualisierungsnachricht PXU zugewiesen ist. Üblicherweise, aber nicht notwendigerweise, ist der Urheber einer Zuordnungsaktualisierungsnachricht PXU ein Stellvertreterknoten. Das die Urheberadresse ORA enthaltende Datenfeld weist vorzugsweise eine Länge von sechs Oktetten auf.
- Ein die Anzahl der Stellvertreterinformationsfelder NPI (»Number of Proxy Information«) angebendes Datenfeld. Die Anzahl der Stellvertreterinformationsfelder NPI wird in diesem Datenfeld NPI zahlenmäßig angegeben. Das die Anzahl der Stellvertreterinformationsfelder NPI angebende Datenfeld weist vorzugsweise eine Länge von einem Oktett auf.
- Im Folgenden schließt sich ein oder eine Mehrzahl von Stellvertreterinformationsfeldern PI1, ..., PIN an, deren Anzahl im Voraus erläuterten Datenfeld zur Angabe der Anzahl der Stellvertreterinformationsfelder NPI angegeben ist. Ein jeweiliges Stellvertreterinformationsfeld PI1,...,PIN weist vorzugsweise eine Länge von 7, 11, 13 oder 17 Oktetten auf.

Die vorgenannten Datenfelder sind in der Zeichnung in einer Reihenfolge von links nach rechts dargestellt. Es versteht sich von selbst, dass auch eine andere Anordnung in einer alternativen Reihenfolge der vorgenannten Datenfelder denkbar ist.

Zur Erläuterung der Struktur eines Stellvertreterinformationsfeldes wird auf die Darstellung der Figur 3 verwiesen.

Figur 3 zeigt ein beispielhaftes Stellvertreterinformationsfeld PI (»Proxy Information«), bestehend aus einem Kennzeichenfeld FLG (»Flag«), einem Feld RPA zur Angabe einer repräsentierten Adresse (»Represented MAC Address«), einem Feld PXA zur Angabe einer Stellvertreterknotenadresse (»Proxy MAC Address«) sowie einem Feld zur Angabe der Stellvertreterinformationslaufzeit PIL (»Proxy Information Live Time«).

Das Kennzeichenfeld FLG enthält eine Mehrzahl von Kennzeichen (»Control Flags«), welche anhand der Figur 4 näher erläutert werden. Das Kennzeichenfeld FLG weist vorzugsweise eine Länge von einem Oktett auf.

Das Feld RPA zur Angabe der repräsentierten Adresse enthält eine Adresse eines repräsentierten Knotens, also beispielsweise eine MAC-Adresse einer der externen Knoten STA11, STA12, STA21, STA22, DEV1, DEV2 gemäß Figur 1. Das Feld RPA enthält beispielsweise eine Adresse eines externen Knotens, welcher von einem Stellvertreterknoten »repräsentiert«, also bezüglich dessen Zuordnung verwaltet wird. Im Beispiel der in Figur 1 gezeigten Anordnung wird der repräsentierte Knoten STA11 vom Stellvertreter MAP1 repräsentiert. Das Feld RPA zur Kennzeichnung der repräsentierten Adresse weist vorzugsweise eine Länge von sechs Oktetten auf.

Das Feld PXA zur Angabe der Stellvertreterknotenadresse enthält die Adresse des Stellvertreterknotens für den Knoten mit der repräsentierten Adresse aus dem Feld RPA. Das Feld PXA zur Angabe der Stellvertreterknotenadresse weist vorzugsweise eine Länge von null oder sechs Oktetten auf. Eine Länge von null, mithin ein Fehlen des Felds, PXA tritt wie weiter unten erläutert dann ein, wenn der im Urheberadressfeld ORA angegebene Urheber der Zuordnungsaktualisierungsnachricht PXU mit dem im Stellvertreterinformationsfeld PI zu aktualisierenden Stellvertreterknoten übereinstimmt. In einem solchen Fall wäre eine Angabe der Stellvertreterknotenadresse PXA im Stellvertreterinformationsfeld PI redundant und damit entbehrlich. Stattdessen wird, bei einem entsprechend gesetzten Kennzeichen SPX, die Adresse des Urhebers der Zuordnungsaktualisierungsnachricht PXU für die Bestimmung der Adresse des zu aktualisierenden Stellvertreterknotens verwendet.

Das Feld PIL zur Angabe einer Stellvertreterinformationslaufzeit definiert eine Zeitdauer, innerhalb der die durch das Stellvertreterinformationsfeld PI übermittelte Stellvertreterinformation als gültig erachtet wird. Das Feld PIL zur Angabe der Stellvertreterinformationslaufzeit weist vorzugsweise eine Länge von null oder vier Oktetten auf.

Die vorgenannten Felder sind in der Zeichnung in einer Reihenfolge von links nach rechts dargestellt. Es versteht sich von selbst, dass auch eine andere Anordnung in einer alternativen Reihenfolge der vorgenannten Felder denkbar ist.

Figur 4 zeigt eine Struktur des in Figur 3 dargestellten Kennzeichenfeld FLG. Das Kennzeichenfeld FLG besteht aus einem ersten Kennzeichen ADL mit einer bevorzugten Länge von einem Bit, einem zweiten Kennzeichen SPX mit einer bevorzugten Länge von einem Bit, einem dritten Kennzeichen LIT mit einer bevorzugten Länge von einem Bit sowie Kennzeichenfeld RSV mit einer bevorzugten Länge von fünf Bit.

Der binäre Wert des ersten Kennzeichens ADL (»Add/Delete«) bestimmt, ob eine zugehörige Zuordnungsinformation hinzugefügt oder gelöscht werden soll. Eine Hinzufügung wird durch einen binären Wert von 0 angewiesen, ein Löschen durch einen binären Wert von 1. Die genannte Zuordnungsinformation wird dabei im Falle einer Hinzufügung zu der Zuordnungsinformation des Empfängers hinzugefügt, im Fall einer angewiesenen Löschung aus der Zuordnungsinformation des Empfängers gelöscht.

Die Kodierung dieses ersten Kennzeichens ADL ist gemäß einer alternativen Ausführungsform auch in entgegengesetzter Weise denkbar, so dass eine Hinzufügung durch einen binären Wert von 1 angewiesen wird, ein Löschen dagegen durch einen binären Wert von 0.

Das zweite Kennzeichen SPX (»Source Proxy«) zeigt das Vorhandensein des Feldes PXA im Stellvertreterinformationsfeld PI an. Stimmt der im Urheberadressfeld ORA angegebene Urheber der Zuordnungsaktualisierungsnachricht PXU mit dem im Stellvertreterinformationsfeld PI zu aktualisierenden Stellvertreterknoten überein, wäre eine Angabe der Stellvertreterknotenadresse PXA im Stellvertreterinformationsfeld PI redundant und damit entbehrlich. Ein binärer Wert von 1 des zweiten Kennzeichens SPX zeigt an, dass aufgrund dieser Redundanz kein Feld zur Angabe einer Stellvertreterknotenadresse PXA im Stellvertreterinformationsfeld PI der Zuordnungsaktualisierungsnachricht PXU vorgesehen ist. Im gegenteiligen Fall, mit einem Wert von 0, enthält das Feld zur Angabe der Stellvertreterknotenadresse PXA eine MAC-Adresse des Stellvertreterknotens. Das zweite Kennzeichen SPX wird auf Empfängerseite derart ausgewertet, dass im Fall eines Wertes von 1 die im Urheberadressfeld ORA angegebene Urheberadresse der Zuordnungsaktualisierungsnachricht PXU als Stellvertreterknotenadresse für die im Stellvertreterinformationsfeld PI der Zuordnungsaktualisierungsnachricht PXU zu aktualisierenden Zuordnung verwendet wird.

Die Kodierung dieses zweiten Kennzeichens SPX ist gemäß einer alternativen Ausführungsform auch in entgegengesetzter Weise denkbar, so dass das zweite Kennzeichen SPX mit einem Wert von 0 anzeigt, dass kein Feld zur Angabe einer Stellvertreterknotenadresse PXA im Stellvertreterinformationsfeld PI der Zuordnungsaktualisierungsnachricht PXU vorgesehen ist und, entsprechend, mit einem Wert von 1, dass ein Feld zur Angabe einer Stellvertreterknotenadresse PXA im Stellvertreterinformationsfeld PI der Zuordnungsaktualisierungsnachricht PXU vorgesehen ist und dass dieses Feld eine MAC-Adresse des Stellvertreterknotens enthält.

Mit der erfindungsgemäßen Verwendung des zweiten Kennzeichens SPX (»Source Proxy«) wird in vorteilhafter Weise erreicht, dass alle möglichen Zuordnungsinformationen von Stellvertreterknoten MAP1, MAP2, MPP gesendet werden können, also sowohl solche Zuordnungsinformationen, bei denen der die Zuordnungsaktualisierungsnachricht PXU sendende Stellvertreterknoten MAP1, MAP2, MPP auch Stellvertreterknoten MAP1, MAP2, MPP der jeweiligen repräsentierten Knoten STA11, STA12, STA21, STA22, DEV1, DEV2 sind als auch Zuordnungsinformationen, bei denen der die Zuordnungsaktualisierungsnachricht PXU sendende Stellvertreterknoten MAP1, MAP2, MPP kein Stellvertreterknoten MAP1, MAP2, MPP der jeweiligen repräsentierten Knoten STA11, STA12, STA21, STA22, DEV1, DEV2 ist, sondern beispielsweise diese Zuordnungsinformation lediglich für andere Stellvertreterknoten MAP1, MAP2, MPP speichert.

Weiterhin wird mit der erfindungsgemäßen Verwendung des zweiten Kennzeichens SPX (»Source Proxy«) in vorteilhafter Weise erreicht, dass die in einem jeweiligen Stellvertreterinformationsfeld PI1,...,PIN übermittelten Zuordnungsinformationen in beliebiger Reihenfolge innerhalb einer einzelnen Zuordnungsaktualisierungsnachricht PXU angegeben werden können.

Das dritte Kennzeichen LIT (»Proxy Information Live Time«) zeigt mit einem Wert von 1 an, dass ein Feld PIL zur Angabe der Stellvertreterinformationslaufzeit in einem jeweiligen Stellvertreterinformationsfeld PI1,...PIN vorgesehen ist. Im gegenteiligen Fall, mit einem Wert von 0, fehlt dieses Feld PIL in diesem jeweiligen Stellvertreterinformationsfeld PI1, ...PIN.

Die Kodierung dieses dritten Kennzeichens LIT ist gemäß einer alternativen Ausführungsform auch in entgegen gesetzter Weise denkbar, so dass das dritte Kennzeichen LIT mit einem Wert von 0 anzeigt, dass ein Feld PIL zur Angabe der Stellvertreterinformationslaufzeit in einem jeweiligen Stellvertreterinformationsfeld PI1,...PIN vorgesehen ist und, entsprechend, mit einem Wert von 1, dass dieses Feld PIL in diesem jeweiligen Stellvertreterinformationsfeld PI1,...PIN fehlt.

Falls durch das Kennzeichen ADL (»Add/Delete«) ein Löschen einer Zuordnungsinformation angewiesen werden soll, braucht das Feld PIL zur Angabe einer Stellvertreterinformationslaufzeit nicht in das Stellvertreterinformationsfeld PI1 eingefügt zu werden. In vorteilhafter Weise wird in einem solchen Fall eine unnötige Länge der Zuordnungsaktualisierungsnachricht PXU vermieden. Im Speziellen ist eine Angabe einer Stellvertreterinformationslaufzeit dann unnötig, wenn die einem Stellvertreterinformationsfeld entsprechende Zuordnungsinformation zu löschen ist. Für den Empfänger einer Zuordnungsaktualisierungsnachricht PXU bedeutet eine fehlende Stellvertreterinformationslaufzeit in einem Stellvertreterinformationsfeld PI1,..., PIN in dem das Kennzeichen ADL ein Hinzufügen der Zuordnungsinformation anweist, dass dieser die Stellvertreterinformationslaufzeit zu definieren hat.

Falls durch das Kennzeichen ADL (»Add/Delete«) eine Hinzufügung einer Zuordnungsinformation angewiesen werden soll, wobei die Zuordnung eine Stellvertreterinformationslaufzeit beinhaltet, wird diese im Feld PIL zur Angabe einer Stellvertreterinformationslaufzeit in das Stellvertreterinformationsfeld PI1 eingefügt. Ist am Stellvertreterknoten MAP1, MAP2, MPP, der die Zuordnungsaktualisierungsnachricht PXU empfängt, bereits eine Stellvertreterinformationslaufzeit eingetragen, so wird diese durch die im Feld PIL enthaltene Stellvertreterinformationslaufzeit überschrieben, wenn dieser Wert höher ist als der im Stellvertreterknoten MAP1, MAP2, MPP gespeicherte Wert der Stellvertreterinformationslaufzeit. Ist am Stellvertreterknoten MAP1, MAP2, MPP, der die Zuordnungsaktualisierungsnachricht PXU empfängt, bereits eine Stellvertreterinformationslaufzeit eingetragen, so wird diese durch die im Feld PIL enthaltene Stellvertreterinformationslaufzeit nicht überschrieben, wenn dieser Wert niedriger ist als der im Stellvertreterknoten MAP1, MAP2, MPP gespeicherte Wert der Stellvertreterinformationslaufzeit.

Das Kennzeichenfeld RSV (»Reserved«) enthält beispielsweise Kennzeichen, welche für zukünftige oder anderweitige Anwendungen vorgesehen sind und welche im Zusammenhang dieses Ausführungsbeispiels ohne weiteren Belang sind.

Anhand der Figuren 1, 5 und 6 wird im Folgenden eine Zuordnung unter Anwendung der erfindungsgemäßen Zuordnungsaktualisierungsnachricht erläutert. Es wird dabei von einem Mesh-Netz gemäß Figur 1 ausgegangen. Die externen Netzknoten STA11, STA12, STA21, STA22, DEV1, DEV2 sind als repräsentierte Knoten einem jeweiligen Stellvertreterknoten MAP1, MAP2, MPP zugeordnet.

Die Stellvertreterknoten MAP1, MAP2, MPP speichern Zuordnungsinformationen in jeweiligen Zuordnungstabellen, welche in dieser Reihenfolge von links nach rechts in Figur 6 gezeigt sind.

In einer ersten Zuordnungstabelle, in der Zeichnung ganz links gezeigt, sind an einem ersten Stellvertreterknoten MAP1 gespeicherte Zuordnungsinformationen hinterlegt.
- Ein erster repräsentierter Knoten STA11 (»Represented Device«) ist dem ersten Stellvertreterknoten MAP1 zugeordnet. Die Zuordnung ist mit einer Stellvertreterinformationslaufzeit von unendlich (»infinity«) gekennzeichnet, das heißt, die Zuordnung des ersten repräsentierten Knotens STA11 zum ersten Stellvertreterknoten MAP1 ist zeitlich unbegrenzt.
- Ein zweiter repräsentierter Knoten STA12 ist ebenfalls dem ersten Stellvertreterknoten MAP1 zugeordnet. Die Zuordnung des zweiten repräsentierten Knotens STA12 zum ersten Stellvertreterknoten MAP1 ist mit einer Stellvertreterinformationslaufzeit von 3000 gekennzeichnet, das heißt, die Zuordnung des zweiten repräsentierten Knotens STA12 zum ersten Stellvertreterknoten MAP1 ist auf die Dauer von 3000 Sekunden begrenzt. Die Stellvertreterinformationslaufzeit kann auch mit unendlich (»infinity«) gekennzeichnet werden. Aufgrund einer internen Entscheidungsroutine im ersten Stellvertreterknoten MAP1 wurde jedoch eine Stellvertreterinformationslaufzeit mit einem hohen Wert von 3000 eingetragen, so dass die Zuordnung des zweiten repräsentierten Knoten STA12 am dritten Stellvertreterknoten MPP nach diesem Zeitwert ausläuft. Der erste Stellvertreterknoten MAP1 muss auf diese Weise keine erneute Zuordnungsaktualisierungsnachricht senden, um die Zuordnung des zweiten repräsentierten Knoten STA12 am dritten Stellvertreterknoten MPP zu löschen.
- Ein dritter repräsentierter Knoten DEV1 ist einem dritten Stellvertreterknoten MPP zugeordnet. Die Zuordnung des dritten repräsentierten Knotens DEV1 zum dritten Stellvertreterknoten MPP ist zeitlich unbegrenzt. Am Zuordnungstabelleneintrag für den dritten repräsentierten Knoten DEV1 zeigt sich, dass ein jeweiliger Stellvertreterknoten MAP1, MAP2, MPP nicht nur Zuordnungsinformationen von repräsentierten Knoten speichert, welche dem die Zuordnungstabelle vorhaltenden Stellvertreterknoten MAP1 zugeordnet sind, sondern darüber hinaus auch Zuordnungen von repräsentierten Knoten, in diesem Fall dem dritten und einem vierten repräsentierten Knoten DEV1, STA22, die jeweils anderen Stellvertreterknoten MPP,MAP2 zugeordnet sind.
- Der vierte repräsentierter Knoten STA22 ist einem zweiten Stellvertreterknoten MAP2 zugeordnet. Die Zuordnung ist mit einer Stellvertreterinformationslaufzeit von 200 gekennzeichnet, das heißt, die Zuordnung des vierten repräsentierten Knotens STA22 zum zweiten Stellvertreterknoten MAP2 ist auf eine Zeitdauer von 200 Sekunden begrenzt.

In einer zweiten Zuordnungstabelle, in der Zeichnung mittig gezeigt, sind am zweiten Stellvertreterknoten MAP2 gespeicherte Zuordnungsinformationen hinterlegt.
- Ein fünfter repräsentierter Knoten STA21 ist dem zweiten Stellvertreterknoten MAP2 zugeordnet. Die Zuordnung des fünften repräsentierten Knotens STA21 zum zweiten Stellvertreterknoten MAP2 ist zeitlich unbegrenzt.
- Der vierte repräsentierte Knoten STA22 ist dem zweiten Stellvertreterknoten MAP2 zugeordnet. Die Zuordnung des vierten repräsentierten Knotens STA22 zum ersten Stellvertreterknoten MAP1 ist allerdings in der zweiten Zuordnungstabelle, im Gegensatz zum entsprechenden Eintrag in der ersten Zuordnungstabelle als zeitlich unbegrenzt eingetragen.
- Ein sechster repräsentierter Knoten DEV2 ist dem dritten Stellvertreterknoten MPP zugeordnet. Die Zuordnung des sechsten repräsentierten Knotens DEV2 zum dritten Stellvertreterknoten MPP ist zeitlich unbegrenzt.
- Der zweite repräsentierte Knoten STA12 ist dem ersten Stellvertreterknoten MAP1 zugeordnet. Die Zuordnung des zweiten repräsentierten Knotens STA12 zum ersten Stellvertreterknoten MAP1 ist allerdings in der zweiten Zuordnungstabelle, im Gegensatz zum entsprechenden Eintrag in der ersten Zuordnungstabelle auf eine Zeitdauer von 200 Sekunden begrenzt eingetragen.

In einer dritten Zuordnungstabelle, in der Zeichnung ganz rechts gezeigt, sind am dritten Stellvertreterknoten MPP gespeicherte Zuordnungsinformationen hinterlegt.
- Der dritte repräsentierte Knoten DEV1 ist dem dritten Stellvertreterknoten MPP zugeordnet. Die Zuordnung des dritten repräsentierten Knotens DEV1 zum dritten Stellvertreterknoten MPP ist in Übereinstimmung mit der in der ersten Zuordnungstabelle eingetragenen Information als zeitlich unbegrenzt eingetragen.
- Der sechste repräsentierte Knoten DEV2 ist dem dritten Stellvertreterknoten MPP zugeordnet. Die Zuordnung des sechsten repräsentierten Knotens DEV2 zum dritten Stellvertreterknoten MPP ist in Übereinstimmung mit der in der zweiten Zuordnungstabelle eingetragenen Information als zeitlich unbegrenzt eingetragen.
- Der erste repräsentierter Knoten STA11 ist dem ersten Stellvertreterknoten MAP1 zugeordnet. Die Zuordnung des ersten repräsentierten Knotens STA11 zum ersten Stellvertreterknoten MAP1 ist allerdings in der dritten Zuordnungstabelle, im Gegensatz zum entsprechenden Eintrag in der ersten Zuordnungstabelle, auf eine Zeitdauer von 1345 Sekunden begrenzt eingetragen.
- Der vierte repräsentierte Knoten STA22 ist dem zweiten Stellvertreterknoten MAP2 zugeordnet. Die Zuordnung des vierten repräsentierten Knotens STA22 zum zweiten Stellvertreterknoten MAP2 ist allerdings in der dritten Zuordnungstabelle, im Gegensatz zum entsprechenden Eintrag in der ersten Zuordnungstabelle, auf eine Zeitdauer von 2870 Sekunden begrenzt eingetragen.

Anhand der Darstellung von Figur 1 wird im Folgenden angenommen, dass eine vormals bestehende Zuordnung des ersten repräsentierten Knotens STA11 vom ersten Stellvertreterknoten MAP1 gelöst wird. Aufgrund dieses Ereignisses wird vom ersten Stellvertreterknoten MAP1 eine komplette Zuordnungsaktualisierungsnachricht auf Basis der im ersten Stellvertreterknoten MAP1 gespeicherten Zuordnungsinformationen an den dritten Stellvertreterknoten MPP gesandt.

Eine zugehörige Zuordnungsaktualisierungsnachricht unter Anwendung der erfindungsgemäßen Mittel zeigt Figur 5. Im Zuge einer Verbesserung der Lesbarkeit sind die vier Stellvertreterinformationsfelder zeilenweise untereinander dargestellt. Die entsprechend dargestellten Pfeile in Figur 5 deuten jedoch an, dass es sich in der Realität um eine zusammenhängend-sequentielle Übertragung handelt.

Die Zuordnungsaktualisierungsnachricht beginnt gemäß der in Figur 2 gezeigten Struktur mit dem Informationsfeld EID, in dem eine nicht weiter interessierende Element-ID eingetragen ist. An dieses Informationsfeld schließt eine Längenangabe LTH an, für die hier, vgl. Figur 5, ein Wert von 56 eingetragen ist. An dieses Informationsfeld schließt sich ein Informationsfeld SN zur Angabe einer Sequenznummer an, für die hier, vgl. Figur 5, ein Wert von 37 eingetragen ist.

Gemäß der Struktur für eine Zuordnungsnachricht, vgl. hierzu Figur 2, folgt nun ein Urheberadressfeld ORA zur Angabe des Urhebers bzw. Senders der Zuordnungsaktualisierungsnachricht. Da die Zuordnungsaktualisierungsnachricht aufgrund eines Zuordnungswechsels im ersten Stellvertreterknoten MAP1 veranlasst wurde, ist besagter erster Stellvertreterknoten MAP1 der Urheber der Zuordnungsaktualisierungsnachricht, vgl. Figur 5. Statt eines dort eingetragenen Identifizierers bzw. Kurznamen für den ersten Stellvertreterknoten MAP1 wäre in einer realen Implementierung vorzugsweise die MAC-Adresse des ersten Stellvertreterknoten MAP1 eingetragen.

Gemäß der Struktur für eine Zuordnungsnachricht, vgl. hierzu Figur 2, folgt nun ein die Anzahl der Stellvertreterinformationsfelder angebendes Datenfeld NPI, für die hier, vgl. Figur 5, ein Wert von 4 eingetragen ist. Die Anzahl NPI der Datenfelder entspricht der Anzahl von vier zu aktualisierenden Zuordnungen, wobei jede Zuordnung in einem eigenen Stellvertreterinformationsfeld definiert ist. Die Anzahl von vier zu aktualisierenden Zuordnungen stimmt wiederum mit der Anzahl der Zuordnungseinträge in der für den ersten Stellvertreterknoten MAP1 vorgesehenen Zuordnungstabelle, vgl. äußerste linke Tabelle in Fig. 6, überein.

Das erste Stellvertreterinformationsfeld, in der Zeichnung ganz oben dargestellt, betrifft eine Zuordnungsaktualisierung bezüglich des repräsentierten Knotens STA11.

Das erste Stellvertreterinformationsfeld beginnt mit einem Kennzeichenfeld FLG mit einer Bitfolge »110« der Kennzeichen, welche in dieser Reihenfolge das ersten Kennzeichen ADL, das zweite Kennzeichen SPX sowie das dritte Kennzeichen LIT kodieren. Zur Semantik der einzelnen Kennzeichen vgl. Beschreibung zu Fig. 2.

Das erste Kennzeichen ADL (»Add/Delete«) hat den binären Wert 1, da ein Löschen der Zuordnungsinformation bezüglich des ersten repräsentierten Knotens STA11, also dem zu entfernenden repräsentierten Knoten STA11, angewiesen werden soll.

Das zweite Kennzeichen SPX (»Source Proxy«) hat den binären Wert 1, womit angezeigt wird, dass der Sender bzw. Urheber der Zuordnungsaktualisierungsnachricht, im vorliegenden Fall der erste Stellvertreterknoten MAP1, übereinstimmt mit dem im ersten Stellvertreterinformationsfeld an sich anzugebenden Stellvertreterknoten, der jedoch aus Redundanzgründen nicht im Stellvertreterinformationsfeld einzutragen ist.

Das dritte Kennzeichen LIT (»Proxy Information Live Time«) hat einen binären Wert 0, womit angezeigt wird, dass das Feld PIL zur Angabe der Stellvertreterinformationslaufzeit in diesem Stellvertreterinformationsfeld fehlt. Da die den ersten repräsentierten Knoten STA11 betreffende Zuordnung am dritten Stellvertreterknoten MPP, dem Empfänger der Zuordnungsaktualisierungsnachricht, gelöscht werden soll, ist eine Angabe der Stellvertreterinformationslaufzeit nicht vorgesehen.

Entsprechend der oben dargestellten Kodierung des Kennzeichenfeldes FLG in dem eine Zuordnungsaktualisierung bezüglich des repräsentierten Knotens STA11 beschreibenden ersten Stellvertreterinformationsfeld ist nun, neben dem Kennzeichenfeld FLG, nur noch ein weiteres Datenfeld, nämlich das Datenfeld RPA zur Angabe der repräsentierten Adresse notwendig. Für diese ist, vgl. Fig. 5, der Wert des repräsentierten Knotens STA11 eingetragen. Das erste Stellvertreterinformationsfeld weist damit eine Länge von 7 Oktetten auf.

Das zweite Stellvertreterinformationsfeld, in der Zeichnung in einer zweiten Zeile unterhalb des ersten Stellvertreterinformationsfeldes dargestellt, betrifft eine Zuordnungsaktualisierung bezüglich des vierten repräsentierten Knotens STA22.

Das zweite Stellvertreterinformationsfeld beginnt mit einem Kennzeichenfeld FLG mit einer Bitfolge »001« der Kennzeichen, welche in dieser Reihenfolge das ersten Kennzeichen ADL, das zweite Kennzeichen SPX sowie das dritte Kennzeichen LIT kodieren. Zur Semantik der einzelnen Kennzeichen vgl. Beschreibung zu Fig. 2.

Das erste Kennzeichen ADL (»Add/Delete«) hat den binären Wert 0, da ein Hinzufügen der Zuordnungsinformation bezüglich des vierten repräsentierten Knotens STA22 angewiesen werden soll.

Das zweite Kennzeichen SPX (»Source Proxy«) hat den binären Wert 0, womit angezeigt wird, dass der Sender bzw. Urheber der Zuordnungsaktualisierungsnachricht, im vorliegenden Fall der erste Stellvertreterknoten MAP1, nicht übereinstimmt mit dem im zweiten Stellvertreterinformationsfeld nunmehr anzugebenden zweiten Stellvertreterknoten MAP2, welcher nach der Zuordnungstabelle des ersten Stellvertreterknotens MAP1, vgl. äußerste linke Tabelle in Fig. 6, der Stellvertreterknoten MAP2 für den vierten repräsentierten Knoten STA22 ist.

Das dritte Kennzeichen LIT (»Proxy Information Live Time«) hat einen binären Wert 1, womit angezeigt wird, dass das Feld PIL zur Angabe der Stellvertreterinformationslaufzeit in diesem Stellvertreterinformationsfeld vorhanden ist. Tatsächlich ist für den vierten repräsentierten Knoten STA22 gemäß der für den ersten Stellvertreterknoten MAP1 vorgesehenen Zuordnungstabelle, vgl. äußerste linke Tabelle in Fig. 6, dessen Zuordnung mit einer Stellvertreterinformationslaufzeit von 200 gekennzeichnet. Eine Angabe einer Stellvertreterinformationslaufzeit im Stellvertreterinformationsfeld ist daher erforderlich.

Entsprechend der oben dargestellten Kodierung des Kennzeichenfeldes FLG in dem eine Zuordnungsaktualisierung bezüglich des repräsentierten Knotens STA22 beschreibenden zweiten Stellvertreterinformationsfeld sind nun, neben dem Kennzeichenfeld FLG, noch drei weitere Datenfelder, nämlich das Datenfeld RPA zur Angabe der repräsentierten Adresse, das Datenfeld PXA zur Angabe der Stellvertreterknotenadresse sowie das Datenfeld PIL zur Angabe der Stellvertreterinformationslaufzeit notwendig. Für diese Datenfelder RPA, PXA, PIL sind, vgl. Fig. 5, in dieser Reihenfolge die Adresse des vierten repräsentierten Knotens STA22, die Adresse des zweiten Stellvertreterknotens MAP2, sowie der Wert 200 für die Stellvertreterinformationslaufzeit des vierten repräsentierten Knotens STA22 eingetragen. Das zweite Stellvertreterinformationsfeld weist damit eine Länge von 17 Oktetten auf.

Das dritte Stellvertreterinformationsfeld, in der Zeichnung in einer dritten Zeile unterhalb des zweiten Stellvertreterinformationsfeldes dargestellt, betrifft eine Zuordnungsaktualisierung bezüglich des dritten repräsentierten Knotens DEV1.

Das dritte Stellvertreterinformationsfeld beginnt mit einem Kennzeichenfeld FLG mit einer Bitfolge »000« der Kennzeichen, welche in dieser Reihenfolge das ersten Kennzeichen ADL, das zweite Kennzeichen SPX sowie das dritte Kennzeichen LIT kodieren. Zur Semantik der einzelnen Kennzeichen vgl. Beschreibung zu Fig. 2.

Das erste Kennzeichen ADL (»Add/Delete«) hat den binären Wert 0, da ein Hinzufügen der Zuordnungsinformation bezüglich des dritten repräsentierten Knotens DEV1 angewiesen werden soll.

Das zweite Kennzeichen SPX (»Source Proxy«) hat den binären Wert 0, womit angezeigt wird, dass der Sender bzw. Urheber der Zuordnungsaktualisierungsnachricht, im vorliegenden Fall der erste Stellvertreterknoten MAP1, nicht übereinstimmt mit dem im dritten Stellvertreterinformationsfeld nunmehr anzugebenden dritten Stellvertreterknoten MPP, welcher nach der Zuordnungstabelle des ersten Stellvertreterknotens MAP1, vgl. äußerste linke Tabelle in Fig. 6, der Stellvertreterknoten MPP für den dritten repräsentierten Knoten DEV1 ist.

Das dritte Kennzeichen LIT (»Proxy Information Live Time«) hat einen binären Wert 0, womit angezeigt wird, dass das Feld PIL zur Angabe der Stellvertreterinformationslaufzeit in diesem Stellvertreterinformationsfeld fehlt. Tatsächlich ist für den dritten repräsentierten Knoten DEV1 gemäß der für den ersten Stellvertreterknoten MAP1 vorgesehenen Zuordnungstabelle, vgl. äußerste linke Tabelle in Fig. 6, dessen Zuordnung mit einer Stellvertreterinformationslaufzeit von unendlich (»infinity«) gekennzeichnet. Eine Angabe dieser Stellvertreterinformationslaufzeit im Stellvertreterinformationsfeld ist daher nicht notwendig.

Entsprechend der oben dargestellten Kodierung des Kennzeichenfeldes FLG in dem eine Zuordnungsaktualisierung bezüglich des repräsentierten Knotens DEV1 beschreibenden dritten Stellvertreterinformationsfeld sind nun, neben dem Kennzeichenfeld FLG, noch zwei weitere Datenfelder, nämlich das Datenfeld RPA zur Angabe der repräsentierten Adresse sowie das Datenfeld PXA zur Angabe der Stellvertreterknotenadresse notwendig. Für diese Datenfelder RPA,PXA sind, vgl. Fig. 5, in dieser Reihenfolge die Adresse des dritten repräsentierten Knotens DEV1 sowie die Adresse des dritten Stellvertreterknotens MPP eingetragen. Das dritte Stellvertreterinformationsfeld weist damit eine Länge von 13 Oktetten auf.

Das vierte Stellvertreterinformationsfeld schließlich, in der Zeichnung in der letzten Zeile unterhalb des dritten Stellvertreterinformationsfeldes dargestellt, betrifft eine Zuordnungsaktualisierung bezüglich des zweiten repräsentierten Knotens STA12.

Das vierte Stellvertreterinformationsfeld beginnt mit einem Kennzeichenfeld FLG mit einer Bitfolge »011« der Kennzeichen, welche in dieser Reihenfolge das ersten Kennzeichen ADL, das zweite Kennzeichen SPX sowie das dritte Kennzeichen LIT kodieren. Zur Semantik der einzelnen Kennzeichen vgl. Beschreibung zu Fig. 2.

Das erste Kennzeichen ADL (»Add/Delete«) hat den binären Wert 0, da ein Hinzufügen der Zuordnungsinformation bezüglich des zweiten repräsentierten Knotens STA12 angewiesen werden soll.

Das zweite Kennzeichen SPX (»Source Proxy«) hat den binären Wert 1, womit angezeigt wird, dass der Sender bzw. Urheber der Zuordnungsaktualisierungsnachricht, im vorliegenden Fall der erste Stellvertreterknoten MAP1, übereinstimmt mit dem im ersten Stellvertreterinformationsfeld an sich anzugebenden Stellvertreterknoten, der jedoch aus Redundanzgründen nicht im Stellvertreterinformationsfeld eingetragen ist.

Das dritte Kennzeichen LIT (»Proxy Information Live Time«) hat einen binären Wert 1, womit angezeigt wird, dass das Feld PIL zur Angabe der Stellvertreterinformationslaufzeit in diesem Stellvertreterinformationsfeld vorhanden ist. Tatsächlich ist für den zweiten repräsentierten Knoten STA12 gemäß der für den ersten Stellvertreterknoten MAP1 vorgesehenen Zuordnungstabelle, vgl. äußerste linke Tabelle in Fig. 6, dessen Zuordnung mit einer Stellvertreterinformationslaufzeit von 3000 Sekunden gekennzeichnet. Eine Angabe einer Stellvertreterinformationslaufzeit im Stellvertreterinformationsfeld ist daher notwendig.

Entsprechend der oben dargestellten Kodierung des Kennzeichenfelds FLG in dem eine Zuordnungsaktualisierung bezüglich des zweiten repräsentierten Knotens STA12 beschreibenden vierten Stellvertreterinformationsfeldes sind nun, neben dem Kennzeichenfeld FLG, noch zwei weitere Datenfelder, nämlich das Datenfeld RPA zur Angabe der repräsentierten Adresse sowie das Datenfeld PIL zur Angabe der Stellvertreterinformationslaufzeit notwendig. Für diese Datenfelder RPA,PIL sind, vgl. Fig. 5, in dieser Reihenfolge die Adresse des zweiten repräsentierten Knotens STA12 sowie der Wert 3000 für die Stellvertreterinformationslaufzeit des zweiten repräsentierten Knotens STA12 eingetragen. Das vierte Stellvertreterinformationsfeld weist damit eine Länge von 11 Oktetten auf.

Die an einem Beispiel gezeigte erfindungsgemäße Zuordnungsaktualisierungsnachricht hat den Vorteil, dass diese sowohl Zuordnungsaktualisierungen des Stellvertreterknotens, der Sender der Zuordnungsaktualisierungsnachricht ist, enthalten kann, als auch Zuordnungsaktualisierungen anderer Stellvertreterknoten. Im Stand der Technik war bislang lediglich eine Zuordnungsaktualisierung des Stellvertreterknotens, der Sender der Zuordnungsaktualisierungsnachricht ist, möglich.

Eine Weiterbildung der Erfindung sieht vor, den Empfänger oder mehrere Empfänger in der Zuordnungsaktualisierungsnachricht PXU anzugeben. Auf diese Weise ist die Übermittlung einer Zuordnungsaktualisierungsnachricht PXU unabhängig von deren Übertragungsweise. Eine Zuordnungsaktualisierungsnachricht PXU wird im Rahmen der Lehre des Standards IEEE 802.11s als ein von mehreren »Information Elements« innerhalb eines »Management Frames« transportiert. Ein solcher Management Frame beginnt mit einer Mehrzahl von Nachrichtenkopfeinträgen (»Header«). Dabei ist eine Übertragung der Zuordnungsaktualisierungsnachricht PXU in sogenannten »4-Address Management Frames« vorgesehen. Diese Übertragungsweise impliziert, dass die Zuordnungsaktualisierungsnachricht PXU direkt, per Unicast, von einem Sender zu einem Empfänger gesendet wird, während ein diese Zuordnungsaktualisierungsnachricht PXU weiterleitender Zwischenknoten die in der Zuordnungsaktualisierungsnachricht PXU enthaltenen Zuordnungsaktualisierungen nicht auswerten kann. Wird nun, gemäß dieser Weiterbildung, der Empfänger in der Zuordnungsaktualisierungsnachricht PXU angegeben, ermöglicht dies die Anwendung eines »3-Address Management Frames«, welcher nur für eine direkte Übertragung zwischen zwei benachbarten Knoten vorgesehen ist. Der Empfänger des 3-Address Management Frames empfängt in diesem Fall die Zuordnungsaktualisierungsnachricht PXU und wertet deren Inhalte aus. Ergibt sich durch diese Auswertung, dass der auswertende Knoten nicht der Empfänger der adressierten Zuordnungsaktualisierungsnachricht PXU ist, wird der Management Frame an den nächsten Knoten entlang des Ziels weitergeleitet.

## Patentansprüche

1. Zuordnungsaktualisierungsnachricht für ein Mesh-Netz, insbesondere für ein Mesh-Netz (MSN) gemäß Standard IEEE 802.11s, das Mesh-Netz (MSN) bestehend aus mindestens einem Stellvertreterknoten (MAP1, MAP2, MPP) der jeweils mindestens einen netzexternen Knoten (STA11, STA12, STA21, STA22, DEV1, DEV2) repräsentiert, wobei die Zuordnungsaktualisierungsnachricht (PXU) zur Aktualisierung von in mindestens einem Stellvertreterknoten (MAP1, MAP2, MPP) vorgehaltener Zuordnungsinformation vorgesehen ist,
**dadurch gekennzeichnet,**
- **dass** in der Zuordnungsaktualisierungsnachricht (PXU) mindestens ein Stellvertreterinformationsfeld (PT1) enthalten ist, welches ein Kennzeichenfeld (FLG) umfasst,
- **dass** das Kennzeichenfeld (FLG) ein Kennzeichen (ADL) enthält, das bestimmt, ob eine im Stellvertreterinformationsfeld (PI1) definierte Zuordnung aus der Zuordnungsinformation zu löschen oder dieser hinzuzufügen ist,
- **dass** das Kennzeichenfeld (FLG) ein Kennzeichen (LIT) enthält, das bestimmt, ob im Stellvertreterinformationsfeld (PI1) eine Angabe einer Stellertreterinformationslaufzeit (PIL) enthalten ist.

2. Zuordnungsaktualisierungsnachricht gemäß Anspruch 1, **dadurch gekennzeichnet, dass** das Kennzeichenfeld (FLG) ein Kennzeichen (SPX) enthält, das bestimmt, ob im Stellvertreterinformationsfeld (PI1) eine Angabe eines Stellvertreterknotens (PXA) enthalten ist.

3. Zuordnungsaktualisierungsnachricht gemäß einem der Ansprüche 1 und 2, **dadurch gekennzeichnet, dass** die Zuordnungsaktualisierungsnachricht (PXU) ein Datenfeld (NPI) aufweist, welches eine Information über eine darin enthaltene Anzahl von Stellvertreterinformationsfeldern (PI1,..., PIN) beinhaltet.

4. Zuordnungsaktualisierungsnachricht gemäß einem der vorgenannten Ansprüche, **dadurch gekennzeichnet, dass** im Stellvertreterinformationsfeld (PI1) eine Adresse (RPA) eines repräsentierten Knotens (STA11, STA12, STA21, STA22, DEV1, DEV2) enthalten ist.

5. Zuordnungsaktualisierungsnachricht gemäß einem der vorgenannten Ansprüche, wobei die Zuordnungsaktualisierungsnachricht (PXU) eine Urheberadresse (ORA) beinhaltendes Datenfeld aufweist.

6. Zuordnungsaktualisierungsnachricht gemäß einem der vorgenannten Ansprüche, wobei in der Zuordnungsaktualisierungsnachricht (PXU) ein oder mehrere Empfänger angegeben sind.

7. Verfahren zur Zuordnungsaktualisierung in einem Mesh-Netz, insbesondere gemäß dem Standard IEEE 802.11s, das Mesh-Netz (MSN) bestehend aus mindestens einem Stellvertreterknoten (MAP1, MAP2, MPP), des jeweils mindestens einen netzexternen Knoten (STA11, STA12, STA21, STA21, STA22, DEV1, DEV2) repräsentiert, wobei die Zuordnungsaktualisierungsnachricht (PXU) zur Aktualisierung von in mindestens einem Stellvertreterknoten (MAP1, MAP2, MPP) vorgehaltener Zuordnungsinformation vorgesehen ist,
- wobei in der Zuordnungsaktualisierungsnachricht (PXU) mindestens ein Stellvertreterinformationsfeld (PT1) enthalten ist, welches ein Kennzeichenfeld (FLG) umfasst,
- bei dem das Kennzeichenfeld (FLG) ein Kennzeichen (ADL) enthält, anhand dessen bestimmt wird, ob eine im Stellvertreterinformationsfeld (PI1) definierte Zuordnung aus der Zuordnungsinformation zu löschen oder dieser hinzuzufügen ist,
- bei dem das Kennzeichenfeld (FLG) ein Kennzeichen (LIT enthält, anhand dessen bestimmt wird, ob im Stellvertreterinformationsfeld (PI1) eine Angabe einer Stellvertreterinformationslaufzeit (PIL) enthalten ist.

8. Verfahren nach Anspruch 7, **dadurch gekennzeichnet, dass** das Kennzeichenfeld (FLG) ein Kennzeichen (SPX) enthält, anhand dessen bestimmt wird, ob im Stellvertreterinformationsfeld (PT1) eine Angabe eines Stellvertreterknotens (PXA) enthalten ist.

9. Verfahren nach einem der Ansprüche 7 und 8, **dadurch gekennzeichnet, dass** eine Zuordnungsaktualisierungsnachricht (PXU) gemäß einem der Ansprüche 2 bis 6 gesendet wird.

10. Verfahren nach einem der Ansprüche 7 bis 9, **dadurch gekennzeichnet, dass** ein Stellvertreterinformationsfeld (PI1) Zuordnungen von repräsentierten Knoten (STA11, STA12, STA21, ST122, DEV1, DEV2) zu einem Stellertreterknoten (MAP1, MAP2, MPP) enthält.

11. Verfahren nach Anspruch 10, **dadurch gekennzeichnet, dass** die Zuordnungen einer in einem Stellvertreterknoten (MAP1, MAP2, MPP) gespeicherten Zuordnungstabelle entnommen werden.

## Claims

1. Association update message for a mesh network, in particular for a mesh network (MSN) conforming to the IEEE 802.11s standard, the mesh network (MSN) consisting of at least one proxy (MAP1, MAP2, MPP), each proxy representing at least one network-external node (STA11, STA12, STA21, STA22, DEV1, DEV2), with the association update message (PXU) being provided for updating association information maintained in at least one proxy (MAP1, MAP2, MPP),
**characterised in that**,
- contained in the association update message (PXU) is at least one proxy information field (PI1), which incorporates a flag array (FLG),
- the flag array (FLG) contains a flag (ADL) which determines whether an association defined in the proxy information field (PI1) is to be deleted from the association information or added into it,
- the flag array (FLG) contains a flag (LIT) which determines whether the proxy information field (PI1) contains the specification of a proxy information lifetime (PIL).

2. Association update message according to claim 1, **characterised in that** the flag array (FLG) contains a flag (SPX) which determines whether the proxy information field (PI1) contains the specification of a proxy (PXA).

3. Association update message according to claim 1 or 2, **characterised in that** the association update message (PXU) has a data field (NPI) which contains an item of information about the number of proxy information fields (PI1, ..., PIN) contained in it.

4. Association update message according to one of the preceding claims, **characterised in that** the proxy information field (PI1) contains an address (RPA) of a represented node (STA11, STA12, STA21, STA22, DEV1, DEV2).

5. Association update message according to one of the preceding claims, with the association update message (PXU) having a data field containing an originator's address (ORA).

6. Association update message according to one of the preceding claims, with one or more receivers being specified in the association update message (PXU).

7. Method for association updating in a mesh network, in particular conforming to the IEEE 802.11s standard, the mesh network (MSN) consisting of at least one proxy (MAP1, MAP2, MPP), each proxy representing at least one network-external node (STA11, STA12, STA21, STA22, DEV1, DEV2), with the association update message (PXU) being provided for updating association information maintained in at least one proxy (MAP1, MAP2, MPP),
- wherein contained in the association update message (PXU) is at least one proxy information field (PI1), which incorporates a flag array (FLG),
- wherein the flag array (FLG) contains a flag (ADL), on the basis of which it is determined whether an association defined in the proxy information field (PI1) is to be deleted from the association information or added into it,
- wherein the flag array (FLG) contains a flag (LIT) on the basis of which it is determined whether the proxy information field (PI1) contains the specification of a proxy information lifetime (PIL).

8. Method according to claim 7, **characterised in that** the flag array (FLG) contains a flag (SPX), on the basis of which it is determined whether the proxy information field (PI1) contains the specification of a proxy (PXA).

9. Method according to claim 7 or 8, **characterised in that** an association update message (PXU) is sent in accordance with one of claims 2 to 6.

10. Method according to one of claims 7 to 9, **characterised in that** a proxy information field (PI1) contains associations of represented nodes (STA11, STA12, STA21, STA22, DEV1, DEV2) with a proxy (MAP1, MAP2, MPP).

11. Method according to claim 10, **characterised in that** the associations are taken from an association table stored in a proxy (MAP1, MAP2, MPP).

## Revendications

1. Message de mise à jour d'affectations pour un réseau maillé, en particulier pour un réseau maillé (MSN) selon la norme IEEE 802.11s, le réseau maillé (MSN) se composant d'au moins un noeud mandataire (MAP1, MAP2, MPP) qui représente respectivement au moins un noeud externe au réseau (STA11, STA12, STA21, STA22, DEV 1, DEV2), dans lequel le message de mise à jour d'affectations (PXU) est prévu pour la mise à jour d'une information d'affectation fournie dans au moins un noeud mandataire (MAP1, MAP2, MPP),
**caractérisé en ce**
- **que** dans le message de mise à jour d'affectations (PXU) est contenu au moins un champ d'informations mandataires (PI1) qui comprend un champ d'identification (FLG),
- **que** le champ d'identification (FLG) contient une identification (ADL), qui détermine si une affectation définie dans le champ d'informations mandataires (PI1) doit être effacée de l'information d'affectation ou y être ajoutée,
- **que** le champ d'identification (FLG) contient une identification (LIT), qui détermine si une indication d'une durée d'informations mandataires (PIL) est contenue dans le champ d'informations mandataires (PI1).

2. Message de mise à jour d'affectations selon la revendication 1, **caractérisé en ce que** le champ d'identification (FLG) contient une identification (SPX), qui détermine si une indication d'un noeud mandataire (PXA) est contenue dans le champ d'informations mandataires (PI1).

3. Message de mise à jour d'affectations selon l'une des revendications 1 et 2, **caractérisé en ce que** le message de mise à jour d'affectations (PXU) présente un champ de données (NPI), qui comporte une information relative à un nombre qu'il contient de champs d'informations mandataires (PI1, ..., PIN).

4. Message de mise à jour d'affectations selon l'une des revendications précédentes, **caractérisé en ce que** dans le champ d'informations mandataires (PI1) est contenue une adresse (RPA) d'un noeud représenté (STA11, STA12, STA21, STA22, DEV1, DEV2).

5. Message de mise à jour d'affectations selon l'une des revendications précédentes, dans lequel le message de mise à jour d'affectations (PXU) présente un champ de données comportant une adresse d'origine (ORA).

6. Message de mise à jour d'affectations selon l'une des revendications précédentes, dans lequel dans le message de mise à jour d'affectations (PXU) un ou plusieurs récepteurs sont indiqués.

7. Procédé de mise à jour d'affectations dans un réseau maillé, en particulier selon la norme IEEE 802.11s, le réseau maillé (MSN) se composant d'au moins un noeud mandataire (MAP1, MAP2, MPP) qui représente respectivement au moins un noeud externe au réseau (STA11, STA12, STA21, STA22, DEV 1, DEV2), dans lequel le message de mise à jour d'affectations (PXU) est prévu pour la mise à jour d'une information d'affectation fournie dans au moins un noeud mandataire (MAP1, MAP2, MPP),
- dans lequel dans le message de mise à jour d'affectations (PXU) est contenu au moins un champ d'informations mandataires (PI1) qui comprend un champ d'identification (FLG),
- dans lequel le champ d'identification (FLG) contient une identification (ADL), à l'aide de laquelle il est déterminé si une affectation définie dans le champ d'informations mandataires (PI1) doit être effacée de l'information d'affectation ou y être ajoutée,
- dans lequel le champ d'identification (FLG) contient une identification (LIT), à l'aide de laquelle il est déterminé si une indication d'une durée d'informations mandataires (PIL) est contenue dans le champ d'informations mandataires (PI1).

8. Procédé selon la revendication 7, **caractérisé en ce que** le champ d'identification (FLG) contient une identification (SPX), à l'aide de laquelle il est déterminé si une indication d'un noeud mandataire (PXA) est contenue dans le champ d'informations mandataires (PI1).

9. Procédé selon l'une des revendications 7 et 8, **caractérisé en ce qu'**un message de mise à jour d'affectations (PXU) selon l'une des revendications 2 à 6 est envoyé.

10. Procédé selon l'une des revendications 7 à 9, **caractérisé en ce qu'**un champ d'informations mandataires (PI1) contient des affectations des noeuds représentés (STA11, STA12, STA21, STA22, DEV1, DEV2) à un noeud mandataire (MAP1, MAP2, MPP).

11. Procédé selon la revendication 10, **caractérisé en ce que** les affectations sont extraites d'un tableau d'affectations stocké dans un noeud mandataire (MAP1, MAP2, MPP).
